# EUROPEAN PATENT SPECIFICATION

(11) **EP 1 065 180 B1**
(45) Date of publication and mention of the grant of the patent: **03.12.2003**
(21) Application number: 00830441.2
(22) Date of filing: 26.06.2000
(51) Int. Cl.: C03C 17/23, C03C 17/28, C03C 17/34, C03C 17/42, C03C 27/04

(54) **A method for treating a glass container for the adhesion of a thermoplastic polymer**
Verfahren zur Behandlung eines Glasbehälters für die Haftung eines thermoplastischen Polymers
Méthode de traitement d'un récipient en verre pour l'adhérence d'un polymère thermoplastique

(30) Priority: 30.06.1999 IT PR990053
(43) Date of publication of application: 03.01.2001
(73) Proprietor: Bormioli Rocco & Figlio S.p.A., 43100 Parma (PR) (IT)
(72) Inventor: Biavati, Alberto, 43030 Basilicanova (Parma) (IT); Tebaldi, Stefano, 43015 Noceto (Parma) (IT)
(74) Representative: Gotra, Stefano

(56) References cited:
- EP-A- 0 654 452
- EP-A- 0 699 638
- GB-A- 2 113 202
- GB-A- 2 114 040
- US-A- 3 663 254

## Description

The present invention relates to a method for treating a glass container for the adhesion of a thermoplastic polymer.

For quite some time, glass containers for food and cosmetic products have been available on the market, whose opening is hermetically closed by a lid heat-sealed thereto and obtained by associating an aluminium film with a heat-sealable polymer film.

One of the problems of such containers is given by the poor adhesive power of the lid on the glass of the opening. Without a suitable preliminary treatment of the opening plane of the container, the adhesion of the polymer film is poor, or the film is detached in a short time especially if the packaged products contain water or water and fats. Various methods are known for improving such adhesion; they all share a preliminary step of tin or titanium oxide deposition.

GB-A-2 139 997 discloses a method for applying an acrylic resin, which however is not completely satisfactory both in terms of closure seal, and because it cannot be applied to all types of glass, such as opal glass. Moreover, being a sprayed-on compound, it can cause aesthetic problems, particularly felt for instance in cosmetic containers.

US-A-4 389 266 describes a method for the deposition on the opening of the containers of a organic metallic chromium complex (chromium III fumerate), but in this case too the results are not fully satisfactory because they are influenced by the type of glass whereof the container is made. Moreover, the chromium compound has limited stability over time with the consequence degradation of the sealing properties, occasionally evidenced by an irregular adhesion.

FR 93 04 329 describes the employment of chromium nitrate, also not fully satisfactory in consideration of the fact that there could be some limitation in its use for food products, due to the presence of a heavy metal.

FR 2 723 939 teaches a method for treating the opening of a glass container according to the preamble to claim 1, to allow the application of an aluminium film associated to a heat-sealable polymer film which globally constitute a lid for the container. This method provides for the deposition of a layer of metal oxide (tin or titanium oxide) and the deposition of a layer of soluble aluminium salt constituted by aluminium nitrate in aqueous solution. This yields satisfactory results with the various types of glass for containers (sodic-calcic, opal and borosilicate), but shows some limitations in the application conditions, which must be strictly adhered to or the adhesion of the polymeric film becomes weak. The temperature of the container opening must range between 100°C and 120°C (and this forces to conduct an intense pre-heating operation, which may lead to the introduction of defects in the container) and the (conduction) heat-sealing conditions indicated are rather drastic: 270 °C (contact temperature), 5 bar, 1.5 seconds, especially in the high temperature required.

EP 0 654 452 A1 discloses a treatment method similar to the previous one, which makes use of a soluble zirconium salt, such as zirconyl nitrate.

The main limitation in the employment of this zirconium salt, as well as other salts (e.g. chloride), resides in the limited stability of their aqueous solutions, especially in the conditions of application. The progressive hydrolysis of zirconium may justify the relatively low reported values of the opening force.

The aqueous solutions of the aforementioned salts can be stabilised by means of strong acidification, which however is a source of additional drawbacks during the application phase. In any case, the results achievable with these salts in terms of adhesion are not very satisfactory: the seal is weak and its life span is limited.

In containers made of sodic calcic glass, it is anyway necessary to have an ample sealing surface available, which can be obtained only in particular cases, whereas on the opal glass adhesive power is very poor.

The aim of the present invention is to eliminate the aforesaid drawbacks making available a method for treating the opening of glass containers which allows an excellent and durable adhesion of the coupled elements onto the different types of glass destined to packaging food, cosmetic and pharmaceutical products.

A further aim is to allow a hermetic and homogeneous adhesion in the packaging of aqueous, fat, mixed, or dry products.

Said aims are fully achieved by the method of the present invention, which is characterised by the content of the claims set out below and in particular in the fact that it provides for the application on the opening of a Zirconium compound selected between an organic Zirconium salt and a Zirconium sol.

The compound comprising Zirconium can be applied preferably by means of PVD techniques, ionic implanting or hot pyrolysis deposition.

Said compound, in addition to Zirconium, can comprise in a mixture also other transition metals such as chromium, zinc, or non-transition metals such as aluminium, tin, titanium, in all the proportions that allow to achieve the aims of the present invention.

Preferably, the compound comprising Zirconium is applied onto the opening of the container at a temperature ranging between 70°C and 100°C.

Preferably the compound comprising Zirconium is applied to a less than 10% weight concentration of Zirconium in aqueous solutions, and yet more preferably ranging between 0.2% and 1.0%.

This and other features shall become more readily apparent from the description that follows of a preferred form of embodiment illustrated, purely by way of non limiting example, in the accompanying drawing tables, in which:

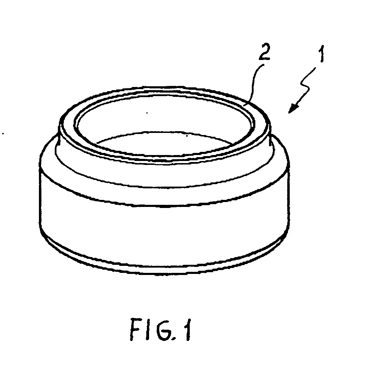

- Figure 1 shows a glass container;
- Figure 2 schematically shows a plant that implements the method.

With reference to the figures, the number 1 indicates a glass container whose opening 2, preferably planar and with a width of the annulus at least equal to 2 mm, is to be hermetically sealed with a lid, not shown because it is of known laminar form.

The glass containers 1, exiting a machine 3 for forming the containers themselves, are immediately conveyed on a conveyor belt 4, in single file or in multiple rows, towards a device 5, known in itself, which provides for the application of tin compounds (for instance monobutyl trichlorotin IV) or titanium compounds (for instance titanium tetrachloride) at a temperature of about 500°C, sufficient for the deposition of a thin layer of metal oxide by pyrolysis on the entire surface of the containers. Subsequently the containers enter an annealing tunnel 6 wherein the controlled reduction of the internal tensions of the glass is conducted.

At the output of the annealing tunnel 6, a device 7 for applying a lubricant (for instance polythene, oleic acid emulsions) can be present. The superficial lubrication of the containers is performed if it is necessary to reduce mutual friction and hence the risk of surface scratches during subsequent handling.

Since the presence of lubricating treatment hinders the subsequent original deposition of compounds comprising Zirconium, a step whereby the openings are flamed by means of suitable burners 8 is provided. The flaming step also allows to pre/heat the openings for the subsequent deposition of the Zirconium compound by means of one or more applicator rollers 9 (two in the illustrated case) coated with absorbent material and fed by a suitable metering dispenser 10.

Said metering dispenser device 10 preferably contains in solution one or more Zirconium compounds selected from an organic Zirconium salt and a Zirconium sol.

In the meaning of the present invention, an organic compound comprising Zirconium is chosen from one or more Zirconium salts in any one of its oxidation states, in which the anion or complexing agent is constituted by a weak organic acid.

The term "sol" means either a solution of Zirconium alkoxides or a zirconia (hydrous oxide) sol with aqueous base, for instance obtained by electrodialysis. To the sol solution can be added appropriate organic acids (lactic, acetic, citric, etc.) to enhance its adhesive effectiveness, as shall be specified farther on.

Said compound, in addition to comprising Zirconium, can comprise in mixture also transition metals such as chrome, zinc, or non transition metals such as aluminium, tin, titanium, in all proportions that allow the achieve the aims of the present invention. After the application of the sol, following evaporation of the solvent, and of any excessive heat, a deposit of vitreous polymeric nature is obtained.

Zirconium compounds can be in polymeric, gelatinous or crystalline form. In the metering device can be present, in a mixture, also other salts or metal complexes, such as alkaline metals, earthy alkaline metals, transition and non transition metals. The application of the Zirconium solutions occurs by contact.

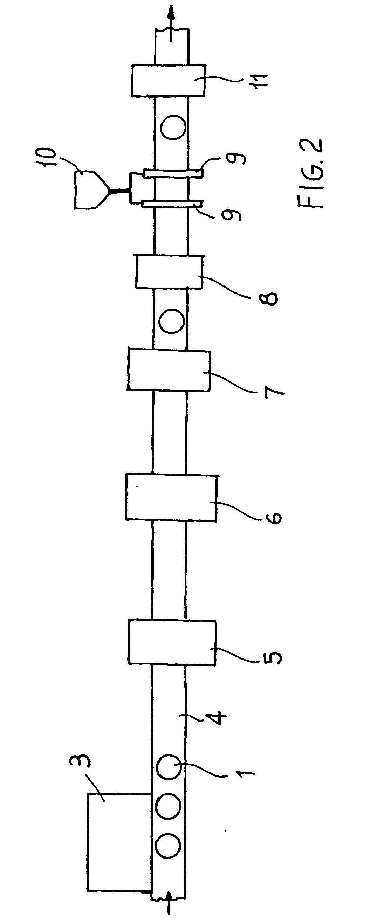

Subsequently to the applicator rollers 9, an appropriate burner 11 can be positioned to favour the polymerisation and anchoring of the Zirconium compounds on the glass. It is also possible to conduct the application by means of PVD or ionic implanting or pyrolysis deposition, for the execution whereof, the appropriate devices are located in the positions 5 and 9 of Figure 2.

The present method thus provides for the original use of a compound comprising Zirconium in the aforementioned meanings, as a product promoting adhesion between the glass and the polymeric layer of the polymer-aluminium pair of the laminar lid. Zirconium compounds can be organic, inorganic or organic metallic, as zirconia sols with aqueous base, zirconium alkoxides, mixed oxides, silicates, ammonium carbonates, acetates, oxalates, citrates, lactates, tartrates, etc. able to be applied according to any technology, including PVD techniques, ionic implanting, hot deposition (for instance by pyrolysis).

Preferably, the compound comprising Zirconium is selected from one or more of the following inorganic, organic or organic metallic compounds, such as zirconia sol with aqueous base, mixed oxide, silicates, ammonium carbonates, acetates, oxalates, citrates, lactates, tartrates, alkoxides, etc.

Preferably, the compound comprising Zirconium is applied onto the opening of the container at a temperature ranging between 70°C and 100°C.

Preferably the present invention proposes the use of water-soluble Zirconium compounds, such as acetate, ammonium carbonate, or zirconia sol with aqueous base possibly with the addition of weak organic acids having one or more carboxylic groups (acetic, propionic, lactic, tartaric, fumaric, citric, etc.) in variable proportion, which in terms of molar ratio relative to Zirconium can range from 0.1 to 5. For instance, in the case of opal glass containers treated with Zirconia sol in aqueous base, containing a 1:1 molar ratio with acetic acid, there is a 30% increase in opening force.

On average, the consumption of Zirconium solution is about 1 litre per 100,000 containers and preferably in the metering device 10 solutions are employed having a Zirconium weight concentration of less than 10% and preferably ranging from 0.2% (0.002 M) and 1.0% (0.01 M), although good adhesion characteristics can be obtained also outside the mentioned range, depending on the type of compound used or on the type of mixtures or sols employed.

The reference polymeric film is Surlyn 1702, but good adhesion characteristics can also be obtained with other films.

The preliminary treatment step with tin or titanium compounds is not indispensable to guarantee adhesion with Zirconium compounds, but it is advisable in the case of opal glass. In this case the preferable thickness of tin oxide is at least 30 CTU (equivalent to 3.9 µg of SnO₂/cm²).

Although the use of the burners 8 is not strictly indispensable if it is not necessary to remove a pre-existing lubricating treatment, it is nevertheless advisable to pre-heat the openings of the containers, with the same burners, to about 90°C, a lower temperature than the one used in the prior art.

Use of the burner 11 is advisable in case of application of the Zirconium sol. While temperatures of slightly over 100°C are reached in this case, this expedient allows for better anchoring and polymerisation of the aforementioned compound.

Since the filled and sealed containers can remain stored for variable, and even rather long, periods, it is necessary to guarantee the consistency over time of the adhesive properties of the treatment of the present method.

To simulate resistance to ageing, two methods were thus identified:
a) immersing the container in water at ambient temperature and measuring adhesion force daily (Table A);
b) keeping the container in a humid static chamber at 25°C, 93% relative humidity, measuring adhesion force every 25 days (Table B).

**TABLE A**

| Compound | Chromium fumerate | Aluminium nitrate | Zirconium oxide sol | Zirconium amm. carb. | Zirconium acetate |
|---|---|---|---|---|---|
| Moles/litre | 0.04 | 0.04 | 0.01 | 0.01 | 0.01 |
| Initial | 17±2.1 | 18±2.3 | >25 | >25 | >25 |
| 1 g | 9±1.0 | 11±1.2 | 19±2.1 | 17±1.9 | >25 |
| 2 dd | 2.1±0.6 | 4.8±0.4 | 13±1.0 | 16±1.2 | 17±2.1 |
| 3 dd | 0 | 0 | 8.1±0.6 | 11±0.8 | 15±0.9 |
| 4 dd | 0 | 0 | 6.7±0.6 | 8.2±0.7 | 12±1.8 |

**TABLE B**

| Compound | Chromium fumerate | Aluminium nitrate | Zirconium oxide sol | Zirconium amm. carb. | Zirconium acetate |
|---|---|---|---|---|---|
| Moles/litre | 0.04 | 0.04 | 0.01 | 0.01 | 0.01 |
| Initial | 17±2.1 | 18±2.3 | >25 | >25 | >25 |
| 25 dd | 10±1.8 | 13±1.8 | 17±1.8 | 19±1.3 | 22±2.1 |
| 50 dd | 6.1±0.9 | 10±0.5 | 11±1.1 | 12±2.0 | 16±1.5 |
| 75 dd | 1.9±0.8 | 8.1±0.6 | 8.9±0.9 | 12±1.6 | 17±1.7 |

For instance, in the case of the seal of an Al-Surlyn 1702 paired element with a contact temperature of about 240°C, a contact time of about 1.2 seconds and a pressure of about 3.5 bar (more favourable conditions than in the prior art), the paired element is perforated and the seal is tested after immersing the container in water at ambient temperature for 24 hours.

Perforation allows water to penetrate into the container, making the test more drastic. Opening force is determined with a dynamometer by traction of the paired element at 90° relative to the plane of the opening and the values in the accompanying tables are expressed in Joules.

Concentration is expressed in moles/litre of the metal in the solution, whilst the initial value refers to the opening force 10 days after the application.

The temperatures of the opening during the application of the products were as follows: about 110°C for aluminium nitrate, about 70°C for chromium fumerate and 90°C for Zirconium compounds.

From the data shown in Tables A and B it is evident that Zirconium compounds allow to vary the opening force within relatively wide limits, while still maintaining a homogeneous adhesion on the plane of the opening.

To make it easier to open the container and avoid ripping the paired element, rather than increasing dilution it is preferable to decrease the contact temperature of the sealing head. For instance at about 200°C opening force is reduced to about 70% of the values shown in the table.

The present method therefore allows to treat the opening of glass containers, in such a way as to ensure a homogeneous and long-lasting adhesion of the laminar lid. This is further coupled with high versatility and practicality of use.

## Claims

1. A method for treating a glass container for the adhesion of a thermoplastic polymer constituting, alone or together with an aluminium layer, a laminar lid destined to be hermetically sealed to the opening of the container, possibly comprising a step whereby the opening of the container is treated with a metal oxide, **characterised in that** it provides for the application onto the container of a Zirconium compound selected from an organic Zirconium salt and a Zirconium sol.

2. A method as claimed in claim 1, wherein the organic Zirconium salt in the form of a salt selected from: silicates, ammonium carbonates, acetates, oxalates, lactates or tartrates.

3. A method as claimed in claim 1, wherein to the sol solution are added organic acids in variable molar ratios.

4. A method as claimed in claim 3, wherein the organic acids are selected from lactic acid, acetic acid, citric acid.

5. A method as claimed in one or more of the previous claims, wherein the Zirconium compounds are mixed with other metal salts, chosen from chromium, zinc, aluminium, tin and titanium.

6. A method as claimed in one or more of the previous claims, wherein the Zirconium compounds are applied by means of PVD technique or ionic implanting or pyrolysis deposition.

7. A method as claimed in one or more of the previous claims, wherein the step of applying said compound comprising Zirconium and/or Zirconyl takes place by contact on the opening of the container, at a temperature ranging between 70°C and 100°C.

8. A method as claimed in one or more of the previous claims, wherein the concentrations in moles / litres of Zirconium in aqueous solution ranges from 0.002 and 0.01.

9. A method as claimed in claim 1, wherein the Zirconium compound is constituted by an organic metallic Zirconium compound applied by means of PVD technique, or ionic implanting, or pyrolysis deposition.

10. A method as claimed in claim 1, wherein after the application of the Zirconium compound, a step for the further heating of the opening of the container by means of suitable burners is completed.

11. A glass container **characterised in that** it comprises an opening which, before the application of a laminar lid, is treated with a method as claimed in any of the previous claims.

## Patentansprüche

1. Verfahren zur Behandlung eines Glasbehälters zum Anhaften eines thermoplastischen Polymers, das alleine oder zusammen mit einer Aluminiumschicht eine Deckelfolie zum dichten Versiegeln der Behälteröffnung bildet, welches Verfahren gegebenenfalls einen Schritt zur Behandlung der Behälteröffnung mit einem Metalloxyd umfasst, **dadurch gekennzeichnet, dass** es das Aufbringen einer Zirkoniumverbindung bestehend aus einem Zirkoniumsalz und einem Zirkoniumsol vorsieht.

2. Verfahren nach Anspruch 1, wobei das organische Zirkoniumsalz zu einem der folgenden Salze gehört: Silikate, Ammoniumkarbonate, Azetate, Oxalate, Laktate oder Tartrate.

3. Verfahren nach Anspruch 1, wobei der Sollösung organische Säuren in verschiedenen Molverhältnissen beigemischt werden.

4. Verfahren nach Anspruch 3, wobei es sich bei den organischen Säuren um Milchsäure, Essigsäure, Zitrussäure handelt.

5. Verfahren nach einem oder mehreren der vorhergehenden Ansprüche, wobei die Zirkoniumverbindung mit anderen Metallsalzen vermischt wird, die der Gruppe der Chrom-, Zink-, Aluminium-, Zinn- und Titansalze angehören.

6. Verfahren nach einem oder mehreren der vorhergehenden Ansprüche, bei der die Zirkoniumverbindungen mittels PVD-Technik oder Ionenimplantation oder pyrolytischer Abscheidung aufgebracht werden.

7. Verfahren nach einem oder mehreren der vorhergehenden Ansprüche, wobei das Aufbringen der genannten, Zirkonium bzw. Zirkonyl enthaltenden Verbindungen durch Berührung mit der Behälteröffnung bei einer Temperatur von 70°C bis 100°C erfolgt.

8. Verfahren nach einem oder mehreren der vorhergehenden Ansprüche, bei der die Zirkoniumkonzentration in einer Wasserlösung zwischen 0,002 und 0,01 mol/Liter liegt.

9. Verfahren nach Anspruch 1, wobei die Zirkoniumverbindung aus einer metallorganischen, mittels PVD-Technik oder Ionenimplantation oder pyrolytischer Abscheidung aufgebrachten Zirkoniumverbindung besteht.

10. Verfahren nach Anspruch 1, wobei nach Aufbringen der Zirkoniumverbindung ein Schritt zur weiteren Erwärmung der Behälteröffnung durch geeignete Brenner durchgeführt wird.

11. Glasbehälter **gekennzeichnet durch** eine Öffnung, die vor Aufbringen einer Deckelfolie mit einem Verfahren nach einem der vorhergehenden Ansprüche behandelt wird.

## Revendications

1. Procédé de traitement d'un récipient en verre pour l'adhésion d'un polymère thermoplastique constituant, seul ou avec une couche d'aluminium, un couvercle laminaire destiné à être hermétiquement scellé sur l'ouverture du récipient, possiblement comprenant une phase au cours de laquelle l'ouverture du récipient est traitée avec un oxyde métallique, **caractérisé en ce qu'**il prévoit l'application sur le récipient d'un composé de Zirconium sélectionné entre un sel organique de Zirconium et un sol de Zirconium.

2. Procédé selon la revendication 1, dans lequel le sel organique de Zirconium se présente sous la forme d'un sel sélectionné parmi: silicates, carbonates d'ammonium, oxalates, lactates ou tartrates.

3. Procédé selon la revendication 1, dans lequel sont ajoutés au sol des acides organiques en de différents rapports molaires.

4. Procédé selon la revendication 3, dans lequel les acides organiques sont sélectionnés parmi: acide lactique, acide acétique, acide citrique.

5. Procédé selon une ou plusieurs des revendications précédentes, dans lequel les composés de Zirconium sont mixés avec d'autres sels métalliques, sélectionnés parmi: chrome, zinc, aluminium, étain e titane.

6. Procédé selon une ou plusieurs des revendications précédentes, dans lequel les composés de Zirconium sont appliqués au moyen d'une technique PVD, une implantation ionique ou un dépôt par pyrolyse.

7. Procédé selon une ou plusieurs des revendications précédentes, dans lequel la phase d'application dudit composé comprenant du Zirconium et/ou Zirconyle se produit par contact sur l'ouverture du récipient, à une température variant de 70°C à 100°C.

8. Procédé selon une ou plusieurs des revendications précédentes, dans lequel les concentrations en moles/litres de Zirconium en solution aqueuse varient de 0,002 à 0,01.

9. Procédé selon la revendication 1, dans lequel le composé de Zirconium est constitué d'un composé organique métallique de Zirconium appliqué au moyen de la technique PVD, implantation ionique ou déposition par pyrolyse.

10. Procédé selon la revendication 1, dans lequel, après l'application du composé de Zirconium, une phase de réchauffement de l'ouverture du récipient au moyen de brûleurs appropriés est activée.

11. Récipient en verre **caractérisé en ce qu'**il comprend une ouverture qui, avant l'application d'un couvercle laminaire, est traitée avec un procédé selon les revendications précédentes.
